# EUROPÄISCHE PATENTSCHRIFT

(11) **EP 3 401 159 B1**
(45) Veröffentlichungstag und Bekanntmachung des Hinweises auf die Patenterteilung: **01.04.2020**
(21) Anmeldenummer: 18000383.2
(22) Anmeldetag: 19.04.2018
(51) Int. Cl.: B60P 3/39, B60P 3/34

(54) **WOHNMOBIL ODER WOHNANHÄNGER**
CAMPER VAN OR CARAVAN
MOBILE HOME OU REMORQUE DE CAMPING

(30) Priorität: 14.04.2017 DE 102017003674
(43) Veröffentlichungstag der Anmeldung: 14.11.2018
(73) Patentinhaber: Mobil Invest GmbH, 99867 Gotha (DE)
(72) Erfinder: Gödecke, Heiner, 33397 Rietberg (DE)
(74) Vertreter: Rolf, Gudrun

(56) Entgegenhaltungen:
- WO-A1-2008/109954
- FR-A1- 2 328 590
- US-A- 2 856 645
- US-A1- 2006 113 814

## Beschreibung

Die Erfindung betrifft ein Wohnmobil oder einen Wohnanhänger mit einer temporären Wohnraumvergrößerung aus einem ausfahrbaren Erker mit einer seitlichen Außenfläche und umlaufenden Seitenflächen.

Es ist ein kompakter Slide-Out-Schlafbereich für Wohnmobile und Caravans bekannt, DE 20 2014 009 092 U1, der aus einem seitlich ausfahrbaren Erker besteht, um die Liegefläche eines quer zur Fahrtrichtung eines Fahrzeuges angeordneten Bettes zu vergrößern. Eine weitere ausfahrbare Erker ist in US 2006/113814 A1 offenbart.

Nachteilig an diesem vorbekannten Slide-Out ist dessen lineare Ausfahrbarkeit, die eine sehr exakte Führung erfordert, um nicht während des Aus- oder Einfahrens des Erkers durch eine Schrägstellung zu verkannten, sodass allseitig eine aufwendige mechanische Führung vorgesehen werden muss, die zudem zusätzliches Gewicht besitzt, sodass sich das Nutzlast des damit ausgestatteten Wohnmobils oder Wohnanhängers deutlich reduziert.

Aufgabe der Erfindung ist es deswegen ein Wohnmobil oder einen Wohnanhänger mit einer temporären Wohnraumvergrößerung zur Verfügung zu stellen, die mechanisch einfach, leichtgewichtig und funktionssicher ausgebildet ist.

Die Lösung dieser Aufgabe ergibt sich in Verbindung mit den Merkmalen des Oberbegriffes erfindungsgemäß zusammen mit den technischen Merkmalen des kennzeichnenden Teils des ersten Hauptanspruchs.

Der Begriff "Fahrzeug" umfasst dabei hier stets Wohnmobile und Wohnanhänger.

Eine solche Schwenkvorrichtung lässt sich mechanisch sehr einfach verwirklichen, ist dabei äußerst robust und beliebig an einem Wohnmobil oder Wohnanhänger anordnen, wobei die Schwenkrichtung nach links, nach rechts, nach hinten oder etwa im Alkovenbereich auch nach vorne, sowie wahlweise nach unten, nach oben oder zur Seite aufschwenkbar ausgebildet sein kann, sodass die möglichen Anwendungsfälle sehr breit gestreut sind.

Die Schwenkvorrichtung es erfinderischen Erkers lässt sich des Weiteren mechanisch sehr einfach umsetzen und benötigt wenig Bauteile, sodass auch das zusätzliche Gewicht einer solchen temporären Wohnraumvergrößerung kaum Auswirkungen auf die mögliche Zuladung eines Wohnmobils oder Wohnanhängers hat.

Weitere vorteilhafte Ausgestaltungen des Gegenstandes der Erfindung ergeben sich mit und in Kombination aus den nachfolgenden Unteransprüchen.

Gemäß der erfindungsgemäßen Ausführungsform der Erfindung besteht die Schwenkvorrichtung aus mindestens einem am Erker festgelegten starren Schwenkhebel, vorzugsweise aber aus zwei seitlich des Erkers angeordneten Schwenkhebeln, der bzw. die um eine gemeinsame Schwenkachse herum verschwenkbar am Fahrzeug gelagert ist bzw. sind. Diese einfachste aller denkbaren Schwenkvorrichtungen aus nur einem oder ggf. zwei starren Schwenkhebeln ist trotz der Einfachheit sehr robust und leichtgewichtig und verhindert zudem bei einem im Wesentlichen starr ausgeführten Erker sicher und dauerhaft dessen Verkanten bei einer Ein- oder Ausschwenkbewegung.

Falls jedoch weiterer Einfluss auf die Schwenkbewegung des Erkers genommen werden soll, kann die Schwenkvorrichtung natürlich auch aus mehreren Gelenkhebeln zusammengesetzt sein, die dann auch über mehrere zueinander parallele Schwenkachsen am Fahrzeug verschwenkbar angelenkt sein können.

Des Weiteren besteht für die Anordnung der Schwenkvorrichtung die Möglichkeit die Schwenkachsen innerhalb, außerhalb oder innerhalb der Hüllfläche der Karosserie anzuordnen, sodass je nach vorhandenen Platzverhältnissen im Wohnmobil oder Wohnanhänger sichergestellt werden kann, dass die erfinderische temporäre Wohnraumvergrößerung bei jedem beliebigen Fahrzeug verbaut werden kann.

Entsprechend der erfindungsgemäßen Ausführungsform der vorliegenden Erfindung ist die Schwenkachse innerhalb des Fahrzeuges angeordnet, sodass auch die gesamte Schwenkvorrichtung innerhalb des Fahrzeuges vorgesehen werden kann, wodurch sichergestellt wird, dass bei Nichtgebrauch und während des Fahrens die Außenkontur des Fahrzeuges vollständig unverändert erhalten bleibt und nur im Campingbetrieb im ausgefahrenen Zustand der ausgefahrene Erker über die Hüllfläche des Fahrzeuges hervorsteht, wobei die Schwenkachse zunächst beliebig oben, unten oder seitlich eines Karosserieausschnittes für den Erker angeordnet sein kann, sodass dieser nach oben, nach unten oder seitlich ausgefahren werden kann, wodurch sich für einen Innenraumgestalter eines Wohnmobils oder Wohnanhängers wesentliche Konstruktionsvorteile ergeben.

Bei einer besonders bevorzugten Ausführungsform der Erfindung ist die Schwenkachse parallel und nah innen an der Hüllfläche des Fahrzeuges oberhalb des Erkers beabstandet davon angeordnet und der Erker um einen freien Öffnungswinkel um diese Schwenkachse herum aus der Hüllfläche des Fahrzeuges seitlich nach oben aus- und einschwenkbar gelagert, wodurch sich in Verbindung mit zwei seitlichen starren Schwenkhebeln eine sehr stabile und verbindungssteife Schwenkvorrichtung ergibt, wobei auch nur ein, dann entsprechend steifer ausgelegter Schwenkhebel möglich bleibt.

Bevorzugterweise ist die nach unten gerichtete untere Seitenfläche des Erkers oder auch die nach oben gerichtete obere Seitenfläche des Erkers als balliger, bei der unteren, bzw. konkaver Rohrausschnitt bei der oberen Seite, ausbildet, dessen Radius jeweils dem Radius um die Schwenkachse entspricht, was den Vorteil mit sich bringt, dass im Karosserieausschnitt für den Erker angeordnete elastische Dichtungen während eines Ein- oder Ausschwenkens des Erkers permanent auf dessen umlaufenden Seitenflächen anliegen können, da sich die relative Entfernung zwischen Seitenflächen und Dichtungen nicht verändert. Hierdurch wird gewährleistet, dass in jedem Zustand des Erkers, sei er während des Fahrens eingeklappt, oder im Campingbetrieb ausgefahren, oder auch in jeder denkbaren Zwischenstellung des Erkers eine wasser- und schmutzdichte Abdichtung des Fahrgastraumes zur Verfügung gestellt werden kann.

Vom weiteren Vorteil ist eine Ausführungsform, bei der die umlaufenden Seitenflächen auf der nach innen ins Fahrzeug gerichteten Seite einen etwa rechtwinklig nach außen abgewinkelt umlaufenden Kragen aufweisen, der eine innere Kontaktfläche mit der Karosserie bildet, wobei dieser Kragen im ausgefahrenen Zustand des Erkers an der Innenseite der Karosserie anliegt und so neben einer Bewegungsbegrenzung Platz für weitere Dichtungen und/ oder Dichtflächen für Dichtungen des Fahrzeuges bietet, wodurch sich die witterungsunabhängige Betriebssicherheit dieser temporären Wohnraumvergrößerung während der Benutzung weiter verbessert.

Bevorzugterweise ist die Außenfläche des Erkers in der Ebene der Außenfläche mit über diese überstehende Ränder ausgebildet, deren zum Fahrzeug gerichteten Seiten ebenfalls Kontaktflächen mit Dichtungen oder mit Dichtflächen für Dichtungen des Fahrzeuges ausgestattet, sodass sich auch im geschlossenen Zustand des Erkers eine zusätzliche umlaufende Dichtung zwischen Karosserie und Erker ergibt.

Entsprechend der erfindungsgemäßen Ausführungsform der Erfindung ist unterhalb des Erkers, innerhalb des Fahrzeuges, ein Stellmotor angeordnet, der an einem ausschwenkbaren Hebel angreift, der an einem Ende in einer Gleitführung am Kragen des Erkers beweglich gelagert ist, sodass der Erker über diese Mechanik von dem Stellmotor nach außen ausstellbar und auch wieder nach innen einziehbar ausgebildet ist. Eine mögliche Handbetätigung ist aber bei keiner Version des ausschwenkbaren Erkers ausgeschlossen.

Dieser sehr einfache, aber wirkungsvolle Bewegungsantrieb wird erst durch die starre Schwenkvorrichtung ermöglicht, die eine präzisere und damit technisch aufwendigere Führung des Erkers unnötig macht.

Vorteilhafterweise bildet die untere Seitenfläche des Erkers im ausgeschwenkten Zustand einen ersten Teil der Erweiterungsliegefläche, die durch eine zusätzliche klappbar über eine weitere Schwenkvorrichtung am Fahrzeug angeordnete zweite Erweiterungsliegefläche für eine gemeinsame Zusatzmatratze genutzt werden kann, die im geöffneten Zustand des Erkers auf beiden Erweiterungsliegeflächen aufliegt und im eingeschwenkten Zustand zusammen mit der zusätzlichen Erweiterungsliegefläche in eine aufrechte Position umgeschwenkt ist, wobei sich die Hauptliegeflächen unabhängig von der Stellung des Erkers vorne und/ oder hinten samt Polstern hoch- oder herunterklappen lassen und etwa nur bei tatsächlichem Bedarf auch der Erker zur temporären Wohnraumvergrößerung bzw. zur Bettverlängerung eines quer zur Fahrtrichtung angeordneten Bettes ausgeschwenkt werden kann. Im hochgeschwenkten Zustand befinden sich die zweite Erweiterungsliegefläche und die Zusatzmatratze dabei bevorzugterweise platzsparend innerhalb des Erkers.

Nachfolgend ist ein Ausführungsbeispiel der Erfindung anhand von Zeichnungen näher beschrieben. Es zeigen:

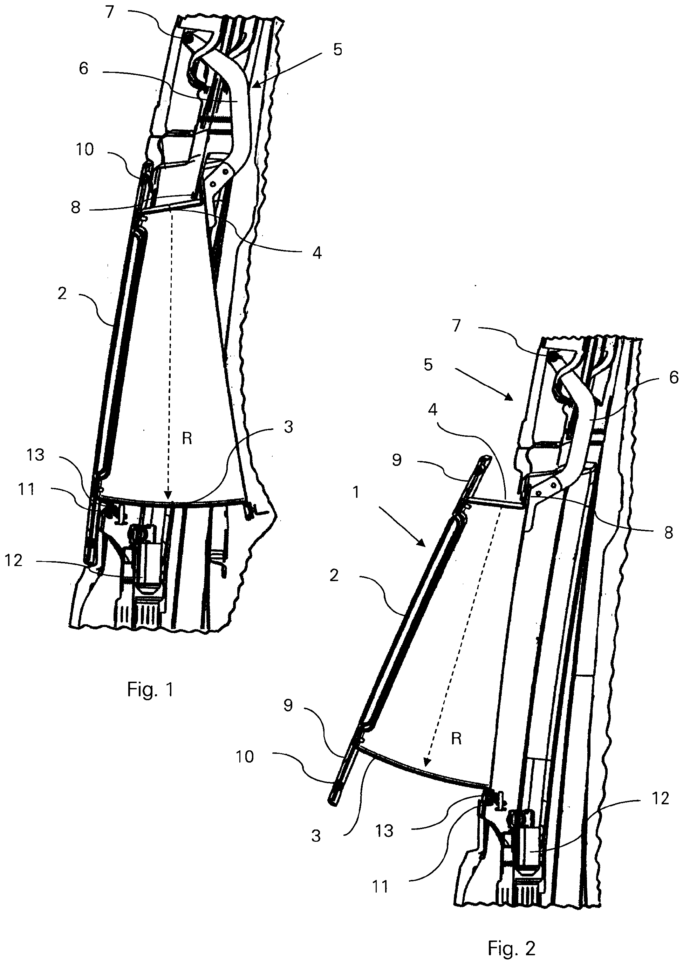

- Fig. 1: einen Erker in eingeklappter Ruheposition, und
- Fig. 2: einen Erker im ausgeschwenkten Campingbetrieb zur temporären Wohnraumvergrößerung bzw. Optimierung einer Liegeflächenlänge.

Die temporäre Wohnraumvergrößerung besteht im Wesentlichen aus einem Erker 1 mit einer seitlich gerichteten Außenfläche 2 und umlaufenden Seitenflächen 3;4, wobei der Erker 1 über zwei seitlich angeordnete Schwenkhebel 6 als Schwenkvorrichtung 5 beabstandet oberhalb eines Karosserieausschnittes für den Erker 1 innerhalb der Fahrzeughülle über eine dazu parallele Schwenkachse 7 gelagert ist, wobei weder der Erker 1 noch das Schwenkgelenk im eingeschwenkten Zustand über die Kontur des Fahrzeuges hervorragen und der Erker 1 im ausgeschwenkten Zustand, etwa während eines Campingbetriebes, nach außen hervorgeschwenkt ist, um beispielsweise die Liegefläche eines Bettes zu verlängern.

In dem in den Figuren dargestellten Beispiel ist zumindest die untere Seitenfläche 3 des Erkers 1 konvex nach unten ausgebildet und weist einen Radius R auf, der dem Abstand der Seitenfläche 3 von der Schwenkachse 7 entspricht, sodass am Fahrzeug angeordnete Dichtungen 11 während einer Schwenkbewegung permanent außen an der unteren Seitenfläche 3 anliegen können ohne davon abzuheben.

Die nicht zeichnerisch dargestellten ebenen vertikalen Seitenflächen des Erkers 1 lassen sich mit ebensolchen Dichtungen wirkungsvoll über den gesamten Schwenkbereich des Erkers 1 abdichten.

Die umlaufenden Seitenflächen 3;4 sind auf der nach innen ins Fahrzeug gerichteten Seite des Erkers 1 mit einem etwa rechtwinklig nach außen abgewinkelten umlaufenden Kragen 8 ausgestattet, der eine innere Kontaktfläche mit der Karosserie des Fahrzeuges bildet. Diese Kontaktflächen können auf der zur Karosserie gerichteten Seite mit Dichtungen und/ oder Dichtflächen für Dichtungen 11 des Fahrzeuges ausgestattet sein, um im ausgeschwenkten Zustand des Erkers 1 eine sichere Abdichtung gegen Feuchtigkeit oder Schmutz zu gewährleisten.

Die seitlich gerichtete Außenfläche 2 des Erkers 1 weist in deren Ebene überstehende Ränder 9 auf, deren zum Fahrzeug gerichteten Seiten ebenfalls Kontaktflächen und Dichtungen 10 und/ oder Dichtflächen für Dichtungen des Fahrzeuges bilden, um auch im eingeschwenkten Zustand des Erkers 1 eine optimale Abdichtung gegen eindringende Feuchtigkeit oder Verschmutzungen zu gewährleisten.

Unterhalb des Erkers 1 ist auf der Innenseite des Fahrzeuges ein Stellmotor 12 angeordnet, der an einem ausschwenkbaren Hebel angreift, der an seinem Ende in einer Gleitführung 13 am Kragen 8 des Erkers 1 beweglich gelagert ist, mit dem über diese Mechanik von dem Stellmotor 12 nach außen ausstellbar und nach innen einziehbar ausgebildet ist.

Die Innenseite der unteren Seitenfläche 3 des Erkers 1 bildet eine erste Erweiterungsliegefläche, die zusammen mit einer klappbar am Fahrzeug angeordneten zweiten Erweiterungsliegefläche einer gemeinsamen Zusatzmatratze als Auflage dient, wobei die Zusatzmatratze und die klappbar angeordnete zweite Erweiterungsliegefläche im eingeschwenkten Zustand des Erkers in eine aufrechte Position verschwenkt sind, die jedoch seitlich der Hauptliegefläche angeordnet ist und deren unabhängige Bewegung ermöglicht, insbesondere dadurch, dass die Zusatzmatratze und die klappbar angeordnete zweite Erweiterungsliegefläche dann hochkant innerhalb des Erkers positioniert sind.

## Patentansprüche

1. Wohnmobil oder Wohnanhänger mit einer temporären Wohnraumvergrößerung aus einem ausfahrbaren Erker (1) mit einer seitlichen Außenfläche (2) und umlaufenden Seitenflächen (3;4), wobei an dem Erker (1) eine Schwenkvorrichtung (3) angeordnet und der Erker (1) in eine in das Wohnmobil oder den Wohnanhänger eingeschwenkte Ruheposition und in eine aus dem Fahrzeug hervorgeschwenkte Nutzposition bewegbar ausgebildet ist und die Schwenkvorrichtung (5) aus mindestens einem starren Schwenkhebel (6) besteht, der um eine Schwenkachse (7) herum verschwenkbar am Fahrzeug gelagert ist und die innerhalb des Fahrzeuges in einer parallelen Ausrichtung zur Hüllfläche des Fahrzeuges angeordnet ist, **dadurch gekennzeichnet, dass** unterhalb des Erkers (1) innerhalb des Fahrzeuges ein Stellmotor (12) angeordnet ist, der an einem ausschwenkbaren Hebel angreift, der an einem Ende in einer Gleitführung (13) am Kragen (8) des Erkers (1) beweglich gelagert ist und dass der Erker (1) über diese Mechanik von dem Stellmotor (12) nach außen ausstellbar und nach innen einziehbar ausgebildet ist.

2. Wohnmobil oder Wohnanhänger nach Anspruch 1, **dadurch gekennzeichnet, dass** die Schwenkachse (7) oberhalb des Erkers (1) beabstandet davon angeordnet ist und der Erker (1) um einen freien Öffnungswinkel um die Schwenkachse (7) herum aus der Hüllfläche des Fahrzeuges seitlich nach oben aus- und einschwenkbar gelagert ist.

3. Wohnmobil oder Wohnanhänger nach einem der vorgenannten Ansprüche, **dadurch gekennzeichnet, dass** die untere Seitenfläche (3) und/ oder die obere Seitenfläche (4) des Erkers (1) einem Rohrausschnitt entspricht, dessen Radius R dem Radius um die Schwenkachse (7) entspricht.

4. Wohnmobil oder Wohnanhänger nach Anspruch 3, **dadurch gekennzeichnet, dass** darin ein Karosserieausschnitt für den Erker (1) eingebracht ist, sowie dessen Ränder mit elastischen Dichtungen versehen sind, die in jeder Winkelstellung gleitend an den umlaufenden Seitenflächen (3;4) anliegen.

5. Wohnmobil oder Wohnanhänger nach einem der vorgenannten Ansprüche, **dadurch gekennzeichnet, dass** die umlaufenden Seitenflächen (3;4) auf der nach innen ins Fahrzeug gerichteten Seite einen nach außen abgewinkelten umlaufenden Kragen (8) aufweisen, der eine innere Kontaktfläche mit der Karosserie bildet.

6. Wohnmobil oder Wohnanhänger nach Anspruch 5, **dadurch gekennzeichnet, dass** die Kontaktfläche auf der zur Karosserie gerichteten Seite mit Dichtungen und/ oder Dichtflächen für Dichtungen (11) des Fahrzeuges ausgestattet ist.

7. Wohnmobil oder Wohnanhänger nach einem der vorgenannten Ansprüche, **dadurch gekennzeichnet, dass** die Außenfläche (2) des Erkers (1) in der Ebene der Außenfläche (2) überstehende Ränder (9) aufweist, deren zum Fahrzeug gerichteten Seiten Kontaktflächen mit Dichtungen (10) und/ oder Dichtflächen für Dichtungen des Fahrzeuges bilden.

8. Wohnmobil oder Wohnanhänger nach einem der vorgenannten Ansprüche, **dadurch gekennzeichnet, dass** im Fahrzeug, parallel zum Erker (1) mit seiner ersten Erweiterungsliegefläche eine zweite Erweiterungsliegefläche für eine Zusatzmatratze über eine weitere Schwenkvorrichtung klappbar angelenkt ist, die im geöffneten Zustand des Erkers (1) kurz vor diesem in die Höhe der unteren inneren Seitenfläche (3) umgeschwenkt und im geschlossenen Zustand des Erkers (1) zusammen mit der Zusatzmatratze in eine aufrechte Position hochgeschwenkt ist.

9. Wohnmobil oder Wohnanhänger nach Anspruch 8, **dadurch gekennzeichnet, dass** die weitere Schwenkvorrichtung so ausgebildet ist, dass sich die zweite Erweiterungsliegefläche und die Zusatzmatratze im ihrem hochgeschwenkten Zustand platzsparend innerhalb des Erkers befinden.

## Claims

1. Camper van or caravan having a temporary living area extension consisting of an extendable bay (1) with a lateral outer face (2) and peripheral side faces (3; 4), a pivoting apparatus (3) being arranged on the bay (1), and the bay (1) being configured such that it can be moved into a rest position, in which it is pivoted into the camper van or the caravan, and into a use position, in which it is pivoted out of the vehicle, and the pivoting apparatus (5) consisting of at least one rigid pivoting lever (6) which is mounted on the vehicle such that it can be pivoted around a pivot axis (7), and which is arranged inside the vehicle in a parallel orientation with respect to the enveloping surface of the vehicle, **characterized in that** an actuating motor (12) is arranged within the vehicle below the bay (1), which actuating motor (12) acts on a lever which can be pivoted out and is mounted movably at one end in a sliding guide (13) on the collar (8) of the bay (1), and **in that** the bay (1) is configured such that it can be deployed towards the outside and can be retracted towards the inside by the actuating motor (12) via the said mechanism.

2. Camper van or caravan according to Claim 1, **characterized in that** the pivot axis (7) is arranged above the bay (1) and spaced apart therefrom, and the bay (1) is mounted such that it can be pivoted out and pivoted in laterally towards the top out of the enveloping surface of the vehicle by a free opening angle around the pivot axis (7).

3. Camper van or caravan according to either of the preceding claims, **characterized in that** the lower side face (3) and/or the upper side face (4) of the bay (1) corresponds to a tubular detail, the radius R of which corresponds to the radius about the pivot axis (7).

4. Camper van or caravan according to Claim 3, **characterized in that** a vehicle body detail for the bay (1) is made therein, and the edges thereof are provided with elastic seals which bear slidingly against the peripheral side faces (3; 4) in every angular position.

5. Camper van or caravan according to one of the preceding claims, **characterized in that**, on the side which is directed inwards into the vehicle, the peripheral side faces (3; 4) have a peripheral collar (8) which is angled away towards the outside and forms an inner contact face with the vehicle body.

6. Camper van or caravan according to Claim 5, **characterized in that** the contact face is equipped with seals and/or sealing faces for seals (11) of the vehicle on the side which is directed towards the vehicle body.

7. Camper van or caravan according to one of the preceding claims, **characterized in that** the outer face (2) of the bay (1) has edges (9) which project in the plane of the outer face (2) and the sides of which, which are directed towards the vehicle, form contact faces with seals (10) and/or sealing faces for seals of the vehicle.

8. Camper van or caravan according to one of the preceding claims, **characterized in that**, in the vehicle parallel to the bay (1) with its first extension bed surface, a second extension bed surface for an additional mattress is articulated such that it can be folded via a further pivoting apparatus, which second extension bed surface, in the open state of the bay (1), is pivoted over just in front of the latter to the height of the lower inner side face (3) and, in the closed state of the bay (1), is pivoted up together with the additional mattress into an upright position.

9. Camper van or caravan according to Claim 8, **characterized in that** the further pivoting apparatus is configured in such a way that the second extension bed surface and the additional mattress are situated within the bay in a space-saving manner in their pivoted-up state.

## Revendications

1. Camping-car ou remorque de camping comprenant un agrandissement temporaire de l'espace habitable à partir d'un oriel extensible (1) pourvu d'une surface extérieure latérale (2) et de surfaces latérales périphériques (3 ; 4), un dispositif de pivotement (3) étant disposé au niveau de l'oriel (1) et l'oriel (1) étant conçu pour être déplaçable jusque dans une position de repos, pivotée jusque dans le camping-car ou la remorque de camping, et jusque dans une position d'utilisation pivotée depuis le véhicule et le dispositif de pivotement (5) comprenant au moins un levier pivotant rigide (6), qui est monté sur le véhicule de manière à pouvoir pivoter sur un axe de pivotement (7) et qui est disposé à l'intérieur du véhicule dans une orientation parallèle à la surface d'enveloppe du véhicule, **caractérisé en ce qu'**un moteur de commande (12) est disposé au-dessous de l'oriel (1) à l'intérieur du véhicule, lequel moteur de commande s'engage avec un levier pivotant qui est monté de manière mobile sur le rebord (8) de l'oriel (1) à une extrémité dans un guide coulissant (13) et **en ce que** l'oriel (1) est conçu pour pouvoir se déployer vers l'extérieur et se rétracter vers l'intérieur au moyen du moteur de commande (12) par le biais de ce mécanisme.

2. Camping-car ou remorque de camping selon la revendication 1, **caractérisé en ce que** l'axe de pivotement (7) est espacé de l'oriel (1) au-dessus de celui-ci et l'oriel (1) est monté de manière à pouvoir pivoter latéralement vers l'extérieur et vers l'intérieur vers le haut d'un angle d'ouverture libre sur l'axe de pivotement (7) de la surface d'enveloppe du véhicule.

3. Camping-car ou remorque de camping selon l'une des revendications précédentes, **caractérisé en ce que** la surface latérale inférieure (3) et/ou la surface latérale supérieure (4) de l'oriel (1) correspond à une section de tube dont le rayon R correspond au rayon autour de l'axe de pivotement (7).

4. Camping-car ou remorque de camping selon la revendication 3, **caractérisé en ce qu'**une découpe de corps destinée à l'oriel (1) est introduite à l'intérieur et ses bords sont pourvus de garnitures d'étanchéité élastiques qui viennent en appui à coulissement sur les surfaces latérales périphérique (3 ; 4) dans n'importe quelle position angulaire.

5. Camping-car ou remorque de camping selon l'une des revendications précédentes, **caractérisé en ce que** les surfaces latérales périphériques (3 ; 4) comportent du côté tourné vers l'intérieur du véhicule un rebord périphérique (8) qui est incliné vers l'extérieur et qui forme une surface de contact intérieure avec la carrosserie.

6. Camping-car ou remorque de camping selon la revendication 5, **caractérisé en ce que** la surface de contact est pourvue du côté carrosserie de garnitures d'étanchéité et/ou de surfaces d'étanchéité destinées à des garnitures d'étanchéité (11) du véhicule.

7. Camping-car ou remorque de camping selon l'une des revendications précédentes, **caractérisé en ce que** la surface extérieure (2) de l'oriel (1) comporte dans le plan de la surface extérieure (2) des bords saillants (9) dont les côtés tournés vers le véhicule forment, avec des garnitures d'étanchéité (10) et/ou des surfaces d'étanchéité destinées à des garnitures d'étanchéité, des surfaces de contact.

8. Camping-car ou remorque de camping selon l'une des revendications précédentes, **caractérisé en ce que** dans le véhicule, une deuxième surface de couchage d'extension destinée à un matelas supplémentaire est reliée de manière articulée et rabattable parallèlement à l'oriel (1) à sa première surface de couchage d'extension par le biais d'un autre dispositif de pivotement, qui pivote, lorsque l'oriel (1) est à l'état ouvert, peu de temps avant celui-ci, à hauteur de la surface latérale intérieure inférieure (3) et pivote, lorsque l'oriel (1) est à l'état fermé, dans une position verticale conjointement avec le matelas supplémentaire.

9. Camping-car ou remorque de camping selon la revendication 8, **caractérisé en ce que** l'autre dispositif de pivotement est conçu de telle sorte que la deuxième surface de couchage d'extension et le matelas supplémentaire se trouvent dans leur état pivoté vers le haut pour économiser de l'espace à l'intérieur de l'oriel.
